**Europäisches Patentamt**

**European Patent Office**

**Office européen des brevets**

(11) Veröffentlichungsnummer: **0 224 827 B1**

# (12) EUROPÄISCHE PATENTSCHRIFT

(45) Veröffentlichungstag der Patentschrift:
23.01.91 Patentblatt 91/04

(51) Int. Cl.⁵: **F03B 1/04, C23C 4/10**

(21) Anmeldenummer: 86116228.7

(22) Anmeldetag: 22.11.86

(54) **Freistrahl-Wasserturbine.**

(30) Priorität: 27.11.85 CH 5065/85

(43) Veröffentlichungstag der Anmeldung:
10.06.87 Patentblatt 87/24

(45) Bekanntmachung des Hinweises auf die
Patenterteilung:
23.01.91 Patentblatt 91/04

(84) Benannte Vertragsstaaten:
AT DE ES FR GB IT SE

(56) Entgegenhaltungen:
CH-A- 329 866
FR-A- 956 016
US-A- 1 849 350
POLYTECHNISCH
TIJDSCHRIFT-WERKTUIGBOUW, Band 33, Nr.
3, März 1978, Seiten 156-160, Den Haag, NL; W.
FRANCKE: "Het thermisch opspulten van
keramische materialen"

(56) Entgegenhaltungen:
POLYTECHNISCH
TIJDSCHRIFT-WERKTUIGBOUW, Band 35, Nr.
4, April 1980, Seiten 227-237, Den Haag, NL;
J.M. HOUBEN: "Thermisch spuiten, een
techniek met perspectief"
THIN SOLID FILMS, Band 118, Nr. 4, August
1984, Seiten 485-493, Elsevier Sequoia,
Lausanne, CH; D. CHUANXIAN et al.:
"Plasma-sprayed wear-resistant ceramic and
cermet coating materials"
W. Domke: Werkstoffkunde und
Werkstoffprüfung, Verlag W. Girardet, 10.
Auflage, S. 334-337
Dubbel: Taschenbuch für den Maschinenbau,
13. Auflage 1970, SpringerVerlag, S. 644/645

(73) Patentinhaber: Sulzer-Escher Wyss AG
Hardstrasse 319
CH-8023 Zürich (CH)

(72) Erfinder: Mugwyler, Kurt
Linth-Escher-Strasse 4
CH-8865 Bilten (CH)

(74) Vertreter: Paschedag, Hansjoachim et al
c/o Escher Wyss AG Patentabteilung Postfach
CH-8023 Zürich (CH)

EP 0 224 827 B1

**Beschreibung**

Die Erfindung betrifft eine Freistrahl-Wasserturbine mit wenigstens einer Düse, die ein Gehäuse mit einer Oeffnung zum Austritt eines Wasserstrahles in Richtung auf die Schaufeln eines Turbinen-Laufrades und einen in Austrittsrichtung des Wasserstrahles in die Oeffnung verschiebbaren, mit einer Nadelspitze versehenen Dorn zur Regulierung der Menge des austretenden Wassers aufweist, wobei wenigstens ein Teil der Oberfläche des Dornes, der Innenwand des Düsengehäuses und/oder der Schaufeln mit einer Hartstoffschicht bedeckt ist, sowie ein Verfahren zu deren Herstellung.

Freistrahl-Wasserturbinen, bei welchen ein Wasserstrahl unter hohem Druck aus einer oder mehreren Düsen etwa tangential zu einem Laufrad austritt und auf die am Aussenkranz des Laufrades angebrachten Schaufeln auftrifft, sind beispielsweise aus US-A-233 692 (Pelton), CH-A-10 118 (Escher Wyss) oder CH-A-49 956 (Bell) bekannt. Zur Regulierung der Menge des aus den Düsen austretenden Wassers ist es beispielsweise aus CH-A-44 137, CH-A-46 083 oder CH-A-57 833 bekannt, innerhalb des Düsengehäuses einen in Ausströmungsrichtung des Wassers verstellbaren Dorn vorzusehen, durch dessen Verstellung der ringförmige Spalt zwischen der Austrittsöffnung des Gehäuses und dem Dorn, und damit die ausströmende Wassermenge verändert werden kann, bis zum völligen Verschliessen der Düsenöffnung.

Im praktischen Betrieb solcher Freistrahl-Wasserturbinen führt das der Turbine unter hohem Druck zugeführte Wasser häufig feine Sand- oder Gesteinskörner mit sich, welche unter hoher Geschwindigkeit z.B. auf die Innenoberfläche der Düse und die Aussenfläche des Dornes auftreffen und dort zu einer Erosion oder Abtragung des Materiales führen. Besonders intensiv ist der Materialabtrag an den Stellen, an denen die Strömung verengt wird, insbesondere am Rand der Austrittsöffnung am Gehäuse, sowie an der Vorderseite, d.h. der Nadelspitze des Dornes. Dies führte dazu, dass die Düsen bereits nach wenigen Monaten soweit abgenützt sind, dass sie ausgetauscht und ersetzt werden müssen. Zu diesem Zweck muss die gesamte asserkraftanlage stillgelegt werden.

Es ist bereits versucht worden, die Standzeiten und die mögliche Betriebsdauer der Düsen von Freistrahl-Wasserturbinen dadurch zu verbessem, dass die Oberfläche des in der Regel aus Chrom-Nickel-Stahl 13/4 bestehenden Dornes hartverchromt wird, mit einer Schichtdicke von wenigen Zehntelmillimetern. Weiter ist vorgeschlagen worden, auf den Dorn austrittsseitig eine Kappe aus dem unter dem Handelsnamen "Stellit" bekann ten Werkstoff aufzusetzen. Dabei handelt es sich um eine Legierung aus Kobalt, Chrom, Wolfram, Eisen und Nickel nebst einem Kohlenstoffzusatz. Hiermit lässt sich zwar eine gewisse Verbesserung erzielen, jedoch ist der Verschleiss und das Erosionsverhalten in ungünstigen Fällen immer noch unbefriedigend.

Aus CH-A-129 866 ist es bekannt, den Dorn einer Pelton-Turbine mit einer Wolframcarbid-Gusssplitt-Panzerung zu versehen. Auch derartige Düsen zeigten trotz ihrer grossen Härte im praktischen Betrieb immer noch eine zu grosse Abenützung und eine ungünstige Lebensdauer.

Die Erfindung setzt sich die Aufgabe, die Erosion und den Oberflächenverschleiss in den Düsen von Freistrahl-Wasserturbinen, speziell an der Oberfläche des verstellbaren Dornes und am Rand der Austrittsöffnung zu vermindern und die Lebensdauer der Düsen im praktischen Betrieb zu vergrössern.

Erfindungsgemäss wird diese Aufgabe dadurch gelöst, dass die Hartstoffschicht eine Keramikschicht mit wenigstens einer Komponente aus der Gruppe der Oxide, Nitride, Boride und Silikate der Elemente aus der Gruppe von Aluminium, Chrom, Eisen, Titan, Tantal, Zirkon, Cer, Bor und Silicium ist, die eine Vickers-Härte von wenigstens 1000, vorzugsweise über 1200 aufweist, und mit einem Plasmaspritzverfahren auf die Oberfläche aufgebracht ist.

Mit keramischen Materialien, bestehend aus einer oder mehreren solchen Verbindungen lassen sich zähe, schlagfeste Schichten mit Vickers-Härten über 1600 bis 2000 erreichen. Diese keramischen Materialien können mit einer geeigneten metallischen Phase (z.B. Co, Ti, Nr-Cr, Co-Cr, usw.) gebunden sein.

Ebenfalls wäre eine Verwendung intermetallischer Phasen oder sogenannter Laves-Phasen möglich. Schichten von wenigstens 0.1 mm Schichtdicke, beispielsweise 0.35 0.50 mm halten dabei auch in ungünstigen Fällen einer Beanspruchung von mehreren Jahren stand.

Obwohl, z.B. aus der Polytechnisch Tijdschrift 33 (1978), S.156-160, und 35 (1980) S.227-237, das Aufbringen kratzfester und thermisch schockfester Hartstoffschichten in einem Plasmaspritzverfahren bekannt war, zeigten solche, mit einem Plasmaspritverfahren aufgebrachte Keramikschichten in Freistrahl-Wasserturbinen überraschenderweise auch eine deutlich verbesserte Widerstandsfähigkeit gegen das Auftreffen kleiner Sand- oder Gesteinspartikel mit hoher Geschwindigkeit auf die Oberfläche, im Vergleich zu der erwähnten, an sich noch härteren Wolframcarbid-Panzerung.

Die Erfindung wird anhand der in den Figuren dargestellten Ausführungsbeispiele näher erläutert. Es zeigen :

Figur 1 eine Freistrahl-Wasserturbine im Schnitt,
Figur 2 die Düse einer solchen Turbine im Schnitt.

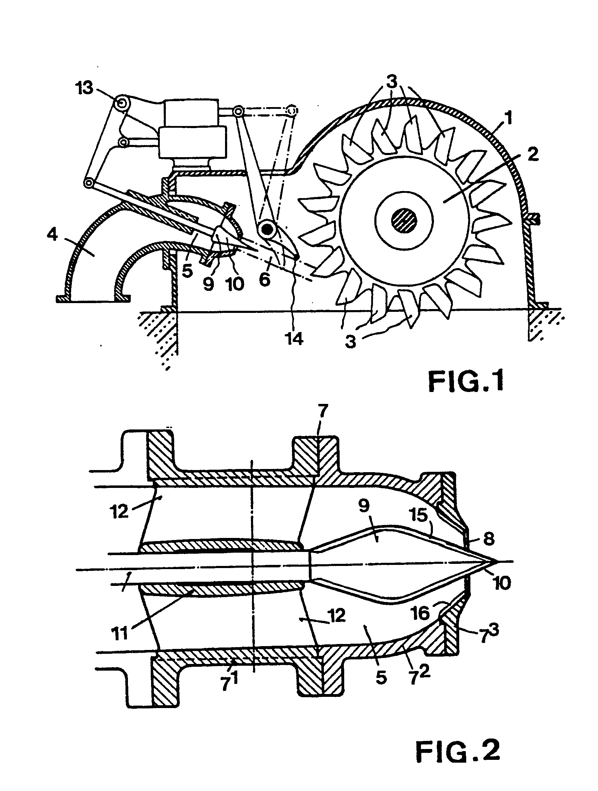

Bei der in Figur 1 wiedergegebenen Freistrahl-Wasserturbine vom Pelton-Typ ist in einem Turbinengehäuse 1 ein Laufrad 2 mit horizontaler Achse vorgesehen, welches an seinem Aussenkranz eine Vielzahl von Schaufeln 3 trägt. Ueber ein Druckrohr 4 wird einer Düse 5 Wasser unter hohem Druck zugeführt, welches in einem Strahl 6 mit hoher Geschwindigkeit aus der Düse austritt und auf die Schaufeln 3 des Turbinenrades auftrifft. An der Peripherie des Laufrades sind dabei meist mehrere Düsen vorgesehen.

Wie insbesondere Figur 2 im Detail zeigt, besteht die Düse 5 aus einem Düsengehäuse 7, welches austrittsseitig eine kreisförmige Oeffnung 8 für den Wasserstrahl aufweist. Das Gehäuse 7 ist aus Montagegründen aus mehreren Teilen $7^1$, $7^2$ und $7^3$ zusammengesetzt. Im Inneren der Düse 5 ist ein Dorn 9 vorgesehen, dessen austrittsseitige Nadelspitze 10 durch die Oeffnung 8 hindurchragt und mit dem austrittsseitigen Gehäuseteil $7^3$ einen ringförmigen Austrittsspalt für das Druckwasser bildet. Der Dorn 9 ist in einer Führung 11, die von Leitwänden 12 vom Gehäuse gehalten wird, in Austrittsrichtung des Wasserstrahles verschiebbar, so dass der Querschnitt des Austrittsspalts nach Bedarf manuell oder automatisch, z.B. abhängig von der Turbinendrehzahl eingestellt werden kann, bis zum völligen Verschluss der Austrittsöffnung. Zur Verstellbarkeit des Dornes 9 ist ein aus einer Anzahl von Vorpublikationen bekannter Steuer- oder Regelmechanismus 13 verwendbar. Zusätzlich wird in der Regel ein weiterer Verstellmechanismus 14 verwendet, welcher die Richtung des austretenden Wasserstrahles von den Schaufeln 3 ablenkt, beispielsweise in der Form eines schwenkbaren Ablenkelementes 14 oder einer Kippvorrichtung für die gesamte Düse 5.

Da das durch die Düse 5 ausströmende Druckwasser in der Praxis stets eine gewisse Menge feiner Sand- oder Gesteinspartikel mit sich führt, wird die Aussenoberfläche des Dornes 9, sowie die Innenoberfläche des Düsengehäuses 7, speziell in der Nähe der Nadelspitze 10 bzw. der Austrittsöffnung 8 im Laufe der Zeit durch Erosion und Abetrag von Oberflächenschichten beschädigt. Für manche in der Natur vorkommenden Gesteinsarten, z.B. Feldspat kann eine Hartverchromung der Oberflächen ausreichen. Für viele Partikel aus natürlichen Mineralien genügt eine solche Oberflächenbehandlung nicht. Um auch unter ungünstigen Verhältnissen eine Erosion und eine Beschädigung der Oberflächen zu vermeiden, ist die Aussenfläche 15 des Dornes 9 mit einer Keramik-Hartstoffschicht mit einer Vickers-Härte von wenigstens 1200 bedeckt. Dabei kann die ganze Oberfläche des Dornes 9 derart beschichtet sein oder unter gewissen Umständen auch nur die Nadelspitze 10, insbesondere der Teil in der Nähe des Randes der Oeffnung 8, wo die grösste Beanspruchung zu erwarten ist. In der gleichen Weise kann auch die Innenfläche des Düsengehäuses 7 und/oder die Innenseiten der Schaufeln des Laufrades mit einer analogen Schutzschicht aus einem Hartstoffmaterial geschützt sein. Dabei kann es genügen, lediglich den ausflussseitigen Teil des Gehäuseteiles $7^3$ in der Umgebung des Randes der Oeffnung 8 mit einer Hartstoffschicht zu versehen.

Als geeignet haben sich Schichten mit wasserfesten Keramik-Materialien auf der basis von Oxiden, Silikaten, Nitriden oder Borilen der Elemente Aluminium, Chrom, Eisen, Titan, Tantal, Zirkon, Cer, Bor oder Silicium oder Mischung solcher Verbindungen erwiesen. Diese werden als reine Keramikschichten oder in Verbindung mit einer metallischen Bindephase, z.B. Co, Ni, Cr oder auch Mischungen verschiedener Metalle, eingesetzt. Reine Keramikschichten oder Metall-Keramik-Schichten, wie z.B. $Cr_2O_3$ oder $Cr_2C_2$/NiCr ergaben bei praktischen Versuchen mit verunreinigtem Wasser gute Resultate.

Um einen guten Oberflächenschutz zu erreichen, sollte die Dicke der Keramikschicht wenigstens 0,1 mm betragen, vorzugsweise 0,35-0,5 mm. In der Praxis sind Schichten bis zu einer Dicke von 1 mm erreicht worden.

Die Herstellung solcher Keramikschichten erfolgt durch Aufspritzen von sehr feinkörnigem Keramik-Material mit einem Plasmaspritzverfahren. Durch die Verwendung geeigneter Metallphasen (z.B. NiCr, Si, B-Legierung) lassen sich die Schichten schmelzverbinden, womit das Ausbrechen einzelner Hartstoffe vermieden werden kann.

Es sei bemerkt, dass der erfindungsgemässe Schutz verschleissgefährdeter Teile auch bei anderen Wasserturbinen oder Pumpturbinen mit grösserer Strömungsgeschwindigkeit von Vorteil sein kann, wenn auch in entsprechend geringerem Ausmass.

**Ansprüche**

1. Freistrahl-Wasserturbine mit wenigstens einer Düse (5), die ein Gehäuse (7) mit einer Oeffnung (8) zum Austritt eines Wasserstrahles in Richtung der Schaufeln (1) eines Turbinen-Laufrades (2) und einen in Austrittsrichtung des Wasserstrahles in die Oeffnung (8) verschiebbaren, mit einer Nadelspitze (10) versehenen Dorn (9) zur Regelung der Menge des austretenden Wassers aufweist, wobei wenigstens ein Teil der Oberfläche des Dornes (9), der Innenwand des Düsengehäuses (7) und/oder der Schaufeln mit einer Hartstoffschicht (15, 16) bedeckt ist, dadurch gekennzeichnet, dass die Hartstoffschicht (15, 16) eine Keramikschicht mit wenigstens einer Komponente aus der Gruppe der Oxide, Nitride, Boride und Silikate der Elemente aus der Gruppe von Aluminium, Chrom, Eisen, Titan, Tantal, Zirkon, Cer, Bor und Silicium ist, die eine Vickers-Härte von wenigstens 1000 aufweist, und mit einem Plasmaspritzverfahren auf die Oberfläche aufgebracht ist.

2. Freistrahl-Wasserturbine mit wenigstens einer Düse nach Anspruch 1, dadurch gekennzeichnet, dass die Keramikschicht (15, 16) wenigstens eine Verbindung aus der Gruppe von Aluminiumoxid, und Chromoxid, enthält.

3. Freistrahl-Wasserturbine mit wenigstens einer Düse nach Anspruch 1 oder 2, dadurch gekennzeichnet, dass die Hartstoffschicht auf einer metallischen Bindephase, vorzugsweise einer wenigstens ein Element aus der Gruppe von Co, Ni, Cr, Si und B enthaltenden Legierung angebracht ist.

4. Freistrahl-Wasserturbine mit wenigstens einer Düse nach einem der Ansprüche 1-3, dadurch gekennzeichnet, dass die Hartstoffschicht (15, 16) eine Vickers-Härte über 1200 aufweist

5. Freistrahl-Wasserturbine mit wenigstens einer Düse nach einem der Ansprüche 1-4, dadurch gekennzeichnet, dass die Dicke der Keramik-Hartstoffschicht (15, 16) wenigstens 0,1 mm beträgt.

6. Freistrahl-Wasserturbine mit wenigstens einer Düse nach Anspruch 5, dadurch gekennzeichnet, dass die Dicke der Hartstoffschicht (15, 16) wenigstens 0,35 mm beträgt und deren Vickers-Härte wenigstens 1600.

7. Freistrahl-Wasserturbine mit wenigstens einer Düse nach einem der Ansprüche 1-6, dadurch gekennzeichnet, dass wenigstens die Oberflächen des Domes (9, 10) und/oder der Innenwand des Düsengehäuses ($7^3$) in der Umgebung der Oeffnung (8) für den Austritt des Wassers mit einer Hartstoffschicht (15, 16) bedeckt ist.

## Claims

1. Free jet water turbine with at least one nozzle (5), which has a housing (7) with an opening (8) for a jet of water to emerge in the direction of the blades (3) of a turbine wheel (2) and a spike (9) which is displaceable into the opening (8) in the direction of emergence of the jet of water and is provided with a needle tip (10) for controlling the rate of the emerging water, with at least part of the surface of the spike (9), of the inner wall of the nozzle housing (7) and/or of the blades being coated with a layer (15, 16) of mechanically resistant material, characterised in that the layer (15, 16) of mechanically resistant material is a ceramic layer with at least one component from the group of oxides, nitrides, borides and silicates of the elements from the group of aluminium, chromium, iron, titanium, tantalum, zirconium, cerium, boron and silicon, which has a Vickers hardness of at least 1000, and is applied to the surface by means of a plasma spray process.

2. Free jet water turbine with at least one nozzle according to Claim 1, characterised in that the ceramic layer (15, 16) contains at least one compound from the group of aluminium oxide, and chromium oxide.

3. Free jet water turbine with at least one nozzle according to Claim 1 or 2, characterised in that the layer of mechanically resistant material is applied on a metallic binder phase, preferably an alloy containing at least one element from the group of Co, Ni, Cr, Si and B.

4. Free jet water turbine with at least one nozzle according to one of Claims 1-3, characterised in that the layer (15, 16) of mechanically resistant material has a Vickers hardness of above 1200.

5. Free jet water turbine with at least one nozzle according to one of Claims 1-4, characterised in that the thickness of the ceramic layer (15, 16) of mechanically resistant material is at least 0.1 mm.

6. Free jet water turbine with at least one nozzle according to Claim 5, characterised in that the thickness of the layer (15, 16) of mechanically resistant material is at least 0.35 mm and the Vickers hardness thereof is at least 1600.

7. Free jet water turbine with at least one nozzle according to one of Claims 1-6, characterised in that at least the surfaces of the spike (9, 10) and/or of the inner wall of the nozzle housing ($7^3$) is covered with a layer (15, 16) of mechanically resistant material in the vicinity of the opening (8) for the emergence of the water.

## Revendications

1. Turbine à eau à jet libre avec au moins une tuyère (5) qui présente un boîtier (7) avec une ouverture (8) pour la sortie d'un jet d'eau en direction des augets (3) d'une roue à aubes de turbine (2) et un pointeau (9) muni d'une pointe d'aiguille (10) et coulissant dans l'ouverture (8) dans le sens de sortie du jet d'eau pour régler le débit d'eau sortant, dans laquelle au moins une partie de la surface du pointeau (9), de la paroi intérieure du boîtier (7) de la tuyère, et/ou des augets, est revêtue d'une couche de matière dure (15, 16), **caractérisée** en ce que la couche de matière dure (15, 16) est une couche céramique avec au moins un constituant du groupe des oxydes, nitrures, borures et silicates des éléments du groupe aluminium, chrome, fer, titane, tantale, zirconium, cérium, bore et silicium, présentant une dureté Vickers d'au moins 1000, et appliquée sur la surface avec un procédé de projection au plasma.

2. Turbine à eau à jet libre avec au moins une tuyère selon la revendication 1, caractérisée en ce que la couche céramique (15, 16) contient au moins une combinaison du groupe comprenant l'oxyde d'aluminium et l'oxyde de chrome.

3. Turbine à eau à jet libre avec au moins une tuyère selon la revendication 1 ou 2, caractérisée en ce que la couche de matière dure est appliquée sur une couche de liaison métallique, de préférence d'un alliage contenant au moins un des éléments du groupe Co, Ni, Cr, Si et B.

4. Turbine à eau à jet libre avec au moins une tuyère selon l'une des revendications 1 à 3, caractérisée en ce que la couche de matière dure (15, 16) présente une dureté Vickers supérieure à 1200.

5. Turbine à eau à jet libre avec au moins une tuyère selon une des revendications 1 à 4, caractérisée en ce que l'épaisseur de la couche de matière dure (15, 16) est d'au moins 0,1 mm.

6. Turbine à eau à jet libre avec au moins une tuyère selon la revendiation 5, caractérisée en ce que l'épaisseur de la couche de matière dure est d'au moins 0,35 mm et que sa dureté Vickers est d'au moins 1600.

7. Turbine à eau à jet libre avec au moins une tuyère selon une des revendications 1 à 6, caractérisée en ce qu'au moins la surface du pointeau (9, 10) et/ou la paroi intérieure du boîtier (7³) de la tuyère sont revêtues, dans la région de l'ouverture (8) pour la sortie de l'eau, d'une couche de matière dure (15, 16).

FIG.1

FIG.2